# EUROPEAN PATENT SPECIFICATION

(11) **EP 4 485 092 B1**
(45) Date of publication and mention of the grant of the patent: **08.04.2026**
(21) Application number: 23181982.2
(22) Date of filing: 28.06.2023
(51) Int. Cl.: G05B 13/02, G06N 5/045, G06N 20/00

(54) **SYSTEMS AND METHODS FOR EXPLAINING ALARMS RAISED BY MACHINE LEARNED MODELS OF INDUSTRIAL AUTOMATION SYSTEMS**
SYSTEME UND VERFAHREN ZUR ERKLÄRUNG VON ALARMEN, DIE VON MASCHINENGELERNTEN MODELLEN INDUSTRIELLER AUTOMATISIERUNGSSYSTEME AUSGELÖST WERDEN
SYSTÈMES ET PROCÉDÉS POUR EXPLICATION D'ALARMES SOULEVÉES PAR DES MODÈLES D'APPRENTISSAGE AUTOMATIQUE DE SYSTÈMES D'AUTOMATISATION INDUSTRIELLE

(43) Date of publication of application: 01.01.2025
(73) Proprietor: ABB SCHWEIZ AG, 5400 Baden (CH)
(72) Inventor: SARKAR, Santonu, 560076 Bangalore (IN); ABUKWAIK, Hadil, 69469 Weinheim (DE); BORRISON, Reuben, 68782 Brühl (DE); SHARMA, Divyasheel, 560048 Bangalore (IN); DIX, Marcel, 78476 Allensbach (DE); K R, Chandrika, 560078 Bangalore (IN); MADUSKAR, Deepti, 462042 Bhopal (IN); PLATENIUS-MOHR, Marie, 69493 Hirschberg an der Bergstraße (DE); KLOEPPER, Benjamin, 68199 Mannheim (DE)
(74) Representative: Maiwald GmbH

(56) References cited:
- EP-A1- 3 968 103
- US-A1- 2021 136 098
- US-A1- 2022 350 790

## Description

### FIELD OF THE INVENTION

The invention relates to systems and methods for explaining alarms raised by machine learned models of industrial automation systems.

### BACKGROUND

Current industrial automation systems are designed to raise alarms to indicate safety or performance issues concerning the industrial process being carried out, among other issues. Machine-learning-driven systems enhance this capability by being trained to predict anomalous behaviour sooner, leading to a proliferation of alarms being raised. Human operators analyze the alarms to determine the appropriate action to take based on their experience. The analysis can take a significant amount of time depending on the operator's expertise. Moreover, operators may not be capable of determining the appropriate action to take in response to the alarms. Delayed or inappropriate responses can lead to catastrophic conditions or plant shutdown. On the other hand, an overzealous response to the alarms can lead to resources being wasted on non-critical issues.

EP 3 968 103 A1 describes an explainer system for explaining output of a prediction system. By applying perturbations to sample data which is input to the prediction system, the explainer system is able to use deviations resulting from the applied perturbations to better explain the model output.

US 2021/136098 A1 relates to a root cause analyzer which receives a plurality of data samples input to an anomaly detection engine, and a corresponding plurality of anomaly labels output from the anomaly detection engine, and uses a trained classification model to determine relative contributions of anomalous features to a prediction that a data sample is anomalous.

### SUMMARY

To better address one or more of these concerns, in a first aspect there is provided an explainer system and method as defined by the appended claims.

In this way, the operator is provided with enhanced information regarding the state and functioning of the industrial automation system for contextualizing the alarm, based on which the operator can make more informed decisions regarding interaction with the industrial automation system to ensure its proper functioning and in particular to avoid technical malfunction.

In one example, processing the model output using at least one prediction explanation technique comprises using the LIME technique to identify the at least one influential feature. Additionally or alternatively, processing the model output using at least one prediction explanation technique may comprise using the SHAP technique to identify the at least one influential feature. It will be understood that other such techniques may be used in other examples. In the context of such techniques, "influential features" may be described alternatively as "important features" or "contributory features", that is, those features or inputs which contributed to the greatest extent to the model output. In the case that the prediction explanation technique assigns feature importances or weights to multiple features or inputs, only those whose metrics lie above a predetermined threshold may be identified as the influential features.

Extracting the contextual information from the at least one machine-readable information source may comprise extracting the information from one or more databases and/or from one or more knowledge bases. In particular, machine-readable sources of information may be provided by a historian database, operator logs, audit trail, and/or ontology (e.g., knowledge graph), such as those described herein. Extraction of information may be performed by an information extractor, such as the past event identifier, knowledge graph manager, or P&ID annotator as described herein. As described herein, the extracted information may thus comprise one or more of: process data (e.g., timeseries data) for similar past events; metadata (e.g., timeseries data) for similar past events; past operator actions taken in response to similar past events; fault diagnosis data for similar past events; process variables related to or appearing in connection with the at least one influential process variable during similar past events; process equipment and/or instrumentation involved in, or impacted by, the alarm.

Extracting the contextual information from the at least one machine-readable information source comprises extracting information pertaining to at least one past event which is similar to the event that is associated with the alarm to be explained. Hereinafter, the event that is associated with the alarm to be explained is referred to for brevity as the "current event". A similar past event may be viewed as a historical episode involving an event of the same type, that is, an event involving at least some of the same signals or process variables as the current event, and/or a similar measurable change observed in relation to those signals or process variables. The extracted information pertaining to the at least one past event may then be prepared for display to the operator as contextual information. In this way, the operator is able to learn from similar past events in order to respond more effectively to the current event.

Extracting the information pertaining to the at least one past event may comprise first identifying the at least one past event which is similar to the current event. Identifying the at least one past event may comprise applying at least one similarity function and/or distance function to determine similarity and/or distance between the current event and at least one candidate past event stored in a database of past events. The database of past events may comprise a historian database. The database and/or its contents thus serve to provide a said source of machine-readable information. In one example, a z-normalized Euclidean distance function is used to measure distance between the current event and the at least one candidate past event stored in the database. Other possible alternative distance functions include dynamic-time-warping (if segments vary in length). The similarity function or distance function may attribute a similarity metric or distance metric, respectively, to each of multiple candidate events, whereby the at least one similar past event to be extracted is selected. The multiple candidate events may be ranked or filtered based on their similarity or distance metrics. For example, the candidate past events may be ranked and one or more of the top-ranked candidates selected. Additionally or alternatively, only those candidates having a similarity metric above a predetermined threshold, or a distance metric below a predetermined threshold, respectively, may be selected for extraction.

To retrieve the at least one similar past event from the database, the information extraction comprises employing a search algorithm to locate the at least one similar past event. Employing the search algorithm comprises formulating a search query based on data characterizing the current event. For example, formulating the search query may comprise obtaining process data for the at least one influential feature, and using the obtained process data to formulate the search query. Formulating the search query may comprise constraining the obtained process data to a time window. The time window may be determined for example using an interquartile approach, for example using a boxplot with the current event as the median. The time window for the current event may be determined from the prediction provided by the machine learned model. The time window may be described alternatively as an explanation window. The time window may have a start time and an end time. The time window may be defined in relation to a fixed point of reference, for example the start of the day. The start time and end time can be determined by the operator by snipping the trend representing the event.

Extracting the information pertaining to at least one similar past event may comprise extracting process data collected in connection with the at least one past event. In one example, wherein the at least one identified influential feature is associated with a process variable of an industrial process carried out by the industrial automation system, i.e., an influential process variable, the extracted process data may comprise process data for the influential process variable. Additionally or alternatively, extracting the information may comprise identifying at least one related process variable which appears in the at least one machine-readable information source in connection with the at least one influential feature, wherein the extracted process data comprises process data for the related process variable. The extracted process data may comprise timeseries data, for example. The extracted timeseries data may be constrained to a timeperiod having a duration equal to that of the timeseries data for the at least one influential feature associated with the current event. To that end, a time window may be determined for the current event, as described above, and used to constrain process data extracted from the at least one machine-readable information source. In one example, an interquartile approach is used to determine the time window. The process data may be extracted from a database storing such data, such as the historian database described herein. While the present disclosure uses the term "process variable", it will be understood that this may be described alternatively as a "signal" in some industrial automation contexts.

Extracting the information pertaining to the at least one similar past event may comprise identifying at least one past operator action taken in connection with the at least one similar past event. Identifying the at least one past operator action may comprise searching an audit trail recording past operator actions taken in connection with past events. The audit trail, serving as a machine-readable information source, may form part of the industrial automation system and/or the explainer system. The at least one similar past event, once identified, may be associated with one or more timestamps. Similarly, the past operator actions recorded in the audit trail may be associated with respective timestamps. The at least one past operator action taken in connection with the at least one similar past event may thus be identified on the basis of these timestamps.

Extracting the information pertaining to the at least one similar past event may comprise obtaining at least one diagnostic detail related to the at least one similar past event. Additionally or alternatively, extracting the information pertaining to the at least one similar past event may comprise obtaining at least one operator note related to the at least one similar past event. Diagnostic details and/or operator notes may be obtained by searching a database storing operator logs, which may form part of the industrial automation system and/or the explainer system. The operator logs may be searching using a timestamp-based approach, as discussed elsewhere herein.

Extracting the contextual information from the at least one machine-readable information source may comprise extracting information from an ontology, i.e., an ontological model, describing the industrial automation system and/or the industrial process carried out thereby. The ontology thus serves to provide at least one said machine-readable information source. Extracting the information from the ontology may comprise identifying at least one entity which is linked to, or associated with, the at least one influential feature in the ontology. The ontology may serve in this sense as a data link catalogue. In the case that at least one related process variable is identified, as described herein, which appears in the at least one information source in connection with the at least one influential feature or influential process variable, extracting the information from the ontology may further comprise identifying at least one entity which is linked to, or associated with, the at least one related process variable in the ontology. In any case, any entity that is so identified in the ontology may concern process equipment and/or instrumentation for regulating and/or measuring the process variable in question. The extracted information may comprise asset information pertaining to that entity. Examples of asset information which may be extracted from the ontology include equipment ID, equipment class, physical location, adjacency matrix of connected equipment. In one example, the ontology may comprise a knowledge graph. Information extraction from an ontology or knowledge graph may be referred to as knowledge extraction from a knowledge base. Contextual information extracted from the ontology in this manner may enable a holistic view of the anomalous behaviour to be provided.

Extracting the contextual information from the at least one machine-readable information source may comprise extracting information from at least one piping and instrumentation diagram (P&ID) pertaining to the industrial automation system. The P&ID shows the interconnection of process equipment and instrumentation used to control the process. Extracting the information from the at least one P&ID may comprise identifying at least one instance of process equipment and/or instrumentation which is associated with the at least one influential feature, for example, a field device having a tag or identifier which corresponds to that of the influential process variable.

Any feature, variable, signal, or measurement as described herein, as well as the associated process equipment or instrumentation such as a field device, control device, or sensor, may be described using standardized identifiers or tags which uniquely identify the entity in question within the industrial process.

Where the contextual information comprises process data, preparing the extracted contextual information for display to the operator may comprise preparing a plot illustrating the process data over time, for example over the time window determined as described herein. Where process data for multiple process variables is extracted, multiple respective may be plotted alongside each other for ready comparison. Preparing the extracted contextual information for display may comprise preparing one or more text fields comprising text extracted for example from the operator logs, audit trail, or ontology. Where the contextual information comprises information extracted from at least one P&ID, preparing the extracted contextual information for display may comprise annotating the P&ID to indicate the contextual information comprised therein, for example by highlighting it. For example, symbols, tags, and/or identifiers appearing in the P&ID may be annotated e.g. by highlighting.

Following its preparation for display, the contextual information may then be displayed to the operator. It will be understood that the contextual information may be displayed by a display device which is external to the explainer system, such as the HMI monitor of the industrial automation system, i.e. the control room operator interface. In this sense, the action of preparing the extracted contextual information for display may be understood to comprise putting the contextual information into a form in which it can be transmitted to the external display device for display thereby.

The explainer system may further comprise a feedback collector configured to collect feedback from the operator regarding the contextual information and to use the feedback to improve subsequent explanations. For example, in the case that the contextual information comprises data pertaining to a similar past event, the operator may provide, as feedback, an indication of the usefulness of that event, which is stored in connection with the similar past event in the respective database. The indication of usefulness may comprise for example a metric, such as a value, e.g., an ordinal value, selected from a set of such values. During a subsequent explanation process, the explainer system may then filter or rank similar past events retrieved from the database based on their usefulness.

According to a second aspect, there is provided a method for explaining an alarm raised by a machine learned model of an industrial automation system according to claim 11.

Optional features and subaspects of the first aspect may form part of the second aspect, mutatis mutandis.

The method of the second aspect may be computer implemented.

According to a third aspect, there is provided a computing system configured to perform the method of the second aspect.

According to a fourth aspect, there is provided a computer program (product) comprising instructions which, when executed by a computing system, enable or cause the computing system to perform the method of the second aspect.

According to a fifth aspect, there is provided a computer-readable (storage) medium comprising instructions which, when executed by a computing system, enable or cause the computing system to perform the method of the second aspect. The computer-readable medium may be transitory or non-transitory, volatile or non-volatile.

The invention is set out in the appended set of claims.

These and other aspects of the invention will be apparent from and elucidated with reference to the embodiments described hereinafter.

The present disclosure provides a system and method to provide actionable explanations to model-driven recommendations. The system and method provide operator-friendly explanations and possible user actions for responding to the model-driven prediction to augment the operator's decision-making. In particular, the present disclosure relates to an explainer system that augments an alert or an anomalous condition, identified by a machine-learned component, with reasons behind the generation of the alert. The explanation, which may appear directly on the HMI monitor/operator screen as a new view, enriches the explanation about signal-based machine learning with historical context. An annotated P&ID may be provided, whereby the explanation is put into the context of the plant topology/connectivity graph. The explanations may indicate which signals are relevant for the prediction (e.g. anomaly, failure). The operator can therefore readily determine whether there is a possible causal relationship between the signals. The operator may give direct feedback on the explanation in context. The operator may give implicit positive feedback on their interest in the insights provided by the explanation by clicking on the details of the explanation.

In industrial automation, field devices and control devices are provided which are able to detect measureable changes occurring during the industrial process being carried out, i.e., transient states during the operation of the equipment. Such devices may generate events in response to the detection of such changes. The term "event" is used herein both to describe the alert generated by the device in response to the detection of the measureable change and to describe the measureable change itself. The alert generated by the device may be associated with one or more attributes including a timestamp indicating when the event occurred, a priority to indicate whether the event is critical, an indication of the condition giving rise to the event, a plant device associated with the event, an event category, and so on. In the case that the detected change involves an equipment malfunction, process deviation, or abnormal condition requiring an operator response, the event may be categorized as an alarm, i.e., a process alarm or fault alarm. The term "alarm" is used herein to denote events which require an operator response.

Any of the components of the explainer system disclosed herein may be described as a "module", "(sub)system", "engine", "tool", or "administrator", as appropriate. Any of the components may be implemented using hardware, firmware, and/or software configured to perform any of the operations described herein. Software or firmware may be embodied as a package, code, instructions, instruction sets and/or data recorded on at least one transitory or non-transitory computer readable storage medium.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

### BRIEF DESCRIPTION OF THE DRAWINGS

A detailed description will now be given, by way of example only, with reference to the accompanying drawings, in which:-
FIG. 1 schematically illustrates an explainer system according to the present disclosure;
FIG. 2 illustrates an explainer method according to the present disclosure, which may be carried out by the explainer system of FIG. 1; and
FIG. 3 illustrates a computing system that can be used in accordance with the systems and methods disclosed herein.

### DETAILED DESCRIPTION

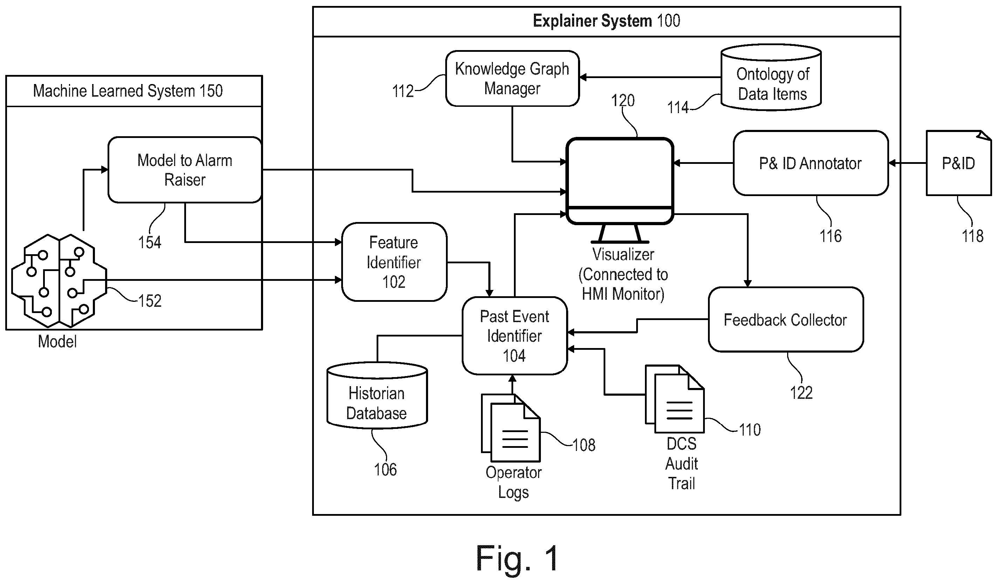

FIG. 1 schematically illustrates an explainer system 100 according to the present disclosure. The explainer system 100 is configured to contextualize alarms raised by a machine learned system 150 of an industrial automation system (not shown). The machine learned system 150 comprises a machine learned model 152 which is trained to predict anomalous behaviour or states, such as safety-critical or performance issues, prevailing within the industrial automation system. The machine learned model 152 in one non-limiting example runs on the Genix platform. Output from the machine learned model 152 is used by a model-to-alarm raiser 154 to raise alarms indicating the predicted anomalous behaviour. The alarms are passed to a monitor of the industrial automation system to be reviewed and actioned by a human operator. To assist the operator in these tasks, the explainer system 100 is configured to present the operator with contextual information relating to the anomalous behaviour in the industrial automation system, to enable the operator to operate the industrial automation system properly, and in particular to prompt the operator to interact with the industrial automation system to avoid technical malfunction.

The explainer system 100 comprises a feature identifier 102 configured to receive the alarm raised by the machine learned system 150. The explainer system 100 is configured to receive also the output from the machine learned model 152 and to identify at least one feature as being (the most) important or (the most) influential in determining the model output. The feature identifier 102 may be described alternatively as a prediction explainer 102. Thus, the feature identifier 102 interacts with the machine learned system 150 to derive traceability from the machine learned model 152. Traceability may be derived from the model 152 using techniques known in the art. For example, the explainability method of feature importance may be used identify features or variables that are most important in determining the model output. Additionally or alternatively, the influential samples method may be used to identify those training samples that are most influential in determining the model output, given a particular input. More particularly, LIME (as described in "Why Should I Trust You?" - Explaining the Predictions of Any Classifier, Ribeiro. M. T. et al, 2016) or SHAP (as described in "A Unified Approach to Interpreting Model Predictions", Lundberg S. M. et al, 2017) may be used to derive a set of features associated with the prediction that led to the alarm being raised. In one non-limiting example, the set of features identified as being important or influential for the model output are expressed as {PV₁, ..., PVₙ}, where PV indicates a process variable of the industrial process being carried by the automation system.

In addition, the feature identifier 102 optionally also identifies the time window of the current event, using for example an interquartile approach. The time window may be represented by <tₛ, t_{d}>, where tₛ is the start time of the current event and t_{d} is its end time. In one such non-limiting example, the feature identifier 102 thus provides information related to the prediction in the form <tₛ, t_{d}, {PV₁, ..., PVₙ}>.

The explainer system 100 further comprises a past event identifier 104 which is configured to identify one or more past events which are similar to the current event. To that end, the past event identifier 104 is configured to form a query for a search engine on the basis of the output received from the feature identifier 102. In one non-limiting example, the past event identifier 104 takes the feature set associated with the current prediction, {PV₁, ..., PVₙ}, which, as described above, comprises the related (i.e., important or influential) features identified using the explainable mode such as LIME or SHAP for that prediction, and snips the timeseries data for those features according to the time window <tₛ, t_{d}>. The one or more snipped subsequences become the search query.

The explainer system 100 is further configured to access a historian database 106 that stores timeseries data for process variables used by the industrial automation system over a period of time. This database is maintained by the industrial automation system and the database grows over time.

The past event identifier 104 is configured to search the historian database 106 by means of a search engine to identify the one or more similar past events. The search engine is configured to execute a search algorithm to run the query over timeseries data in the historian database 106 to identify the one or more similar past events. In one particular non-limiting example, the search algorithm comprises a multivariate similarity search algorithm. More particularly, the multivariate similarity search algorithm may be configured to use a z-normalized Euclidean distance function to measure the distance between the timeseries and the query. It will be appreciated however that other search methods could be also used, for instance those that involve segmenting the continuous timeseries data into (overlapping) windows and searching based on an index or hierarchical structure of the data (obtained for example by clustering). Other possible alternative distance metrics include dynamic-time-warping (if segments vary in length) or Euclidian distance obtained from the embedded representation of a new network. In any case, the search engine is configured to retrieve the one or more similar past events, for example as those past events included in the search results whose distance metric relative to the current event lies below a threshold value.

The past event identifier 104 is optionally further configured to search operator logs 108 to retrieve contextual information for the one or more similar past events. The distributed control system of the industrial automation system may be configured to log information obtained from the operator in connection with past events in the operator logs 108. For example, the operator logs 108 may comprise operator notes, shift reports (including, for example, highlights of the shift that need to be communicated to the operator of the following shift), diagnostic information, indications of related process variables, and/or other free-text documentation logged in connection with past events. Since process variables are typically defined by relevant industrial standards, for example using P for Pressure, F for Flow etc., a regex search may be used to retrieve related process variables from the operator logs 108 for the one or more past events. Another search method may use named-entity-recognition from natural-language processing or specifically trained deep learning models to perform the search.

The past event identifier 104 is optionally further configured to search a DCS audit trail 110 to retrieve further contextual information for the one or more similar past events. The distributed control system (DCS) of the industrial automation system may be further configured to store details of operator actions in the DCS audit trail 110. The DCS audit trail 110 may be configured to store one or more timestamps along with operator action event type information for prior operator actions. The past event identifier 104 may be configured to search operator actions in the DCS audit trail 110 using the timestamps of the identified similar past events to retrieve the corresponding operator action event type.

In this way, the past event identifier 104 is configured to obtain, for the current event, an identification of at least one similar past event, and optionally also contextual information for the at least one similar past event. The contextual information may comprise one or more of the following: an identification of at least one operator action taken in connection with the at least one similar past event; at least one other process variable related to the at least one similar past event (that is, PVs are identified which are different to those already identified by the feature identifier 102 as being important for the model output); at least one diagnostic detail related to the at least one similar past event.

The explainer system 100 is further configured to interact with a knowledge graph manager 112 to obtain further contextual information concerning the features identified by the feature identifier 102. Most industrial processes have an ontology of data items 114, which typically takes the form of a knowledge graph, that provides a formalised description of entities involved in the process, such as process equipment, instrumentation, and so on, as well as their attributes such as type, location, range of values, related processes, volume, nature of fluid, size, etc.. The knowledge graph 114 provides information about the flow of the process and the process variables involved. The explainer system 100 is further configured to retrieve asset information related to one or more of process variables identified by the feature identifier 102 and/or by the past event identifier 104, for subsequent presentation to the operator as part of the contextual information, so that the operator is provided with a holistic view of the process variables relevant to the current prediction.

The explainer system 100 is further provided with a P&ID annotator 116 configured to annotate one or more P&IDs 118 describing the industrial process. In particular, the P&ID annotator 116 may be configured to annotate the one or more P&IDs 118 to highlight one or more of the process variables identified by the feature identifier 102 as being important to the current prediction, and/or to highlight one or more of the relate process variables identified by the past event identifier 104, so as to provide the operator with further contextual information concerning the impact of the prediction. One non-limiting example of highlighting equipment in the P&ID involves overlaying the P&ID with colour to attract the attention of the operator. The P&ID annotator 116 thus provides insights on the influencing factors of the prediction from past and current predictions, for example by highlighting the important features related to the current event, and/or other features that influenced the similar past event.

The explainer system 100 further comprises a visualizer configured to present the event to the operator together with at least part of the contextual information associated therewith. The visualizer 120 in one non-limiting example is connected to the HMI monitor which the operator typically uses to oversee the industrial process. In particular, the visualizer 100 is configured to consolidate the alarm raised by the machine learned system 150 with the output of one or more of the past event identifier 104, knowledge graph manager 112, and P&ID annotator 116 to provide a holistic view of the prediction. For example, the visualizer 120 may present the explanation related to the current prediction alongside one or more actionable recommendations from the similar past events. In one non-limiting example, the visualizer 100 generates an HMI screen comprising two parts: one part depicting situations from the past and a second part depicting the active P&ID. Generally speaking, however, the visualization generated by the visualizer 120 may comprise one or more of the following pieces of contextual information:-
- An identifier of one or more similar events from past situations;
- A visualization of the timeseries data for one or more of the relevant process variables captured during the one or more similar past events, where multiple such similar past events may be navigable via previous and next buttons (the timeseries data may be snipped to a time window of equal or comparable length to that of the current event, as discussed above);
- Metadata concerning the past situation, such as date and time;
- One or more similarity scores used in identifying the past event;
- One or more operator actions taken in connection with the past event, such that the operator can compare the present and the past situations and take appropriate action;
- Operator notes concerning the past event; and
- Diagnostic information concerning the past event.
- A textual summary based on the retrieved text information and the similarity between the selected situation and the current scenario. The textual summary in one non-limiting example comprises a concatenation of the text from the operator notes and other text sources mentioned herein. Any known text summarisation technique may be used for this purpose.
- One or more annotated P&IDs highlighting the process equipment and/or instrumentation affected by the prediction in the current situation and/or in the past situation.

In case the current prediction is the first of its kind, the explainer system 100 may present only details regarding the current prediction, such as the snip of the timeseries data of the current prediction and/or the active P&ID with the process variables involved in the current prediction annotated.

The explainer system 100 may further comprise a feedback collector 122 configured to collect feedback from the operator regarding the displayed visualization. The feedback collector may prompt the operator via the GUI to indicate whether, and/or to what extent, the contextual information provided was helpful, such as the previous incidents retrieved from the historian database 106. In one non-limiting example, the operator may select a usefulness metric from a set of ordinal values. When the operator selects one of these values for each past event to indicate its relevance, the feedback collector 122 may update the relevance score of the respective incident in the historian database 106 to improve future search results.

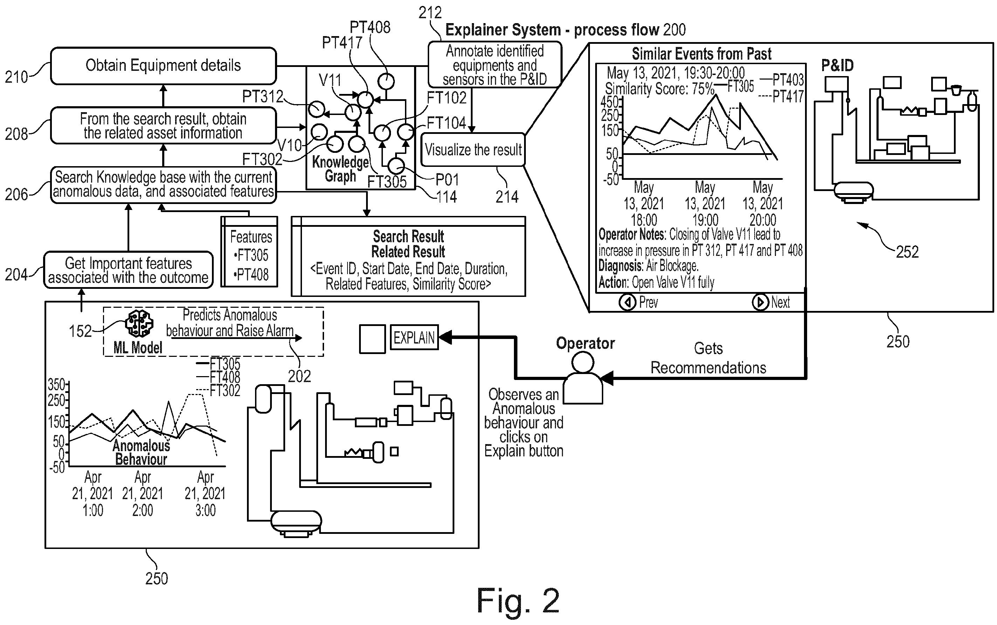

FIG. 2 illustrates the process flow 200 carried out by the explainer system 100.

At step 202, the process begins when the operator interacts with the GUI 250 displayed by the HMI monitor by clicking on a button labelled "EXPLAIN", which is presented on the GUI 250 in connection with the alarm. The alarm, as described elsewhere herein, was raised by the machine learned system 150 in response to anomalous behaviour detected by the machine-learned model 152 that is monitoring the industrial process.

At step 204, the feature identifier 104 receives the output from the model 152 and identifies the set of features that are relevant for the current prediction. For each relevant feature, the feature identifier 104 also obtains the corresponding I/O signal and signal values for the time window determined to be relevant. In the non-limiting example depicted in FIG. 2, the flow rate signal FT305 and the pressure signal PT408 are identified as being important features associated with the outcome.

At step 206, the past event identifier 104 uses the search engine to search machine-readable sources of information to retrieve similar past events and contextual information pertaining thereto. The sources in this example comprises the historian database 106, the operators logs 108, the DCS audit trail 110, the knowledge graph 114, and the P&ID(s) 118, but it will be appreciated that in other instances not all of these sources may be relied upon. In the non-limiting example depicted in FIG. 2, the search engine assigns, to each of the related events included in the search results, contextual information including event metadata in the form of the tuple: <Event ID, Start Date, End Date, Duration, Related Features, Similarity Score>.

In particular, at step 206, a multivariate search algorithm using the z-normalized Euclidean function is used to search for similar past events from the historian database 106. A match-by dimension approach is used. The feature snips from the previous step are taken as a multivariate query Q. Given a multidimensional query Q with p dimensions (number of features), the multivariate search algorithm searches for similar patterns in each univariate timeseries separately. A z-normalized Euclidean distance measure is computed for each dimension p. The distance measure is then sorted in ascending order and the top k nearest neighbours (NN) for each dimension p are identified. An event is identified on the basis of the overlapping subsequences of dimensions p occurring within the same time window, for example a time window having equal duration to that of the current event, although the period in question may vary. Similarly, overlapping subsequences are identified as an event and the average distance measure is computed. These events are then sorted based on the average distance measure and the best matches are identified as those having an average distance measure below a threshold value θ. The distance measure may then be incorporated into the above-mentioned tuple as the "Similarity Score".

Additionally, at step 206, other relevant process variables related to the similar past event, if there are any, are retrieved from operator notes. The operator log 108 contains the timestamp of the past event, event type information such as fault, anomaly etc. and the related process variable values. The timestamp of each past event is used to retrieve the log information. A regex function is then used to identify related process variables from the log information at that particular timestamp. These process variables may then be incorporated into the above-mentioned tuple as the "Related Features".

Step 206 may also comprise the retrieval of diagnostic details from the operator notes and/or shift reports. The operator logs 108 may further contain a description of the fault such as air blockage, air leakage, pump trip, etc., which is retrieved as the diagnostic information.

Step 206 may also comprise the retrieval of operator actions from the DCS audit trail 110, which contains the timestamp and the operator action event type for prior operator actions. Using the timestamp for each similar past event, the audit trail 110 is searched to identify the corresponding operator action.

At step 208, the knowledge graph 114 is searched to obtain asset information related to the process variables identified as being important for the current prediction. That is, the search can identify further related equipment not already identified as being important features for the current event.

At step 210, equipment details are obtained from the knowledge graph 114 for the equipment identified in step 208.

At step 212, the P&ID annotator 116 annotates the relevant P&IDs to highlight the equipment and sensors identified in steps 208 and 210.

At step 214, the visualizer 120 presents on the GUI a visualization 252 of the contextual information related to the alarm raised in step 202. In the non-limiting example depicted in FIG. 2, the visualization 252 comprises, for each similar past event, metadata of the event (i.e., its start date, end date, and time/duration), its similarity score, plots of timeseries data for the important signals FT305 and PT408, a plot of timeseries data for one related process variable PT417, operator notes, diagnosis details, and the corresponding operator action. The operator may scroll through the list of similar past events using GUI buttons labelled "Prev" and "Next". The annotated P&ID for each similar past event appears alongside the event data and metadata.

In other examples, the explainer system 100 may use textual data from other sources (such as alarm descriptions, maintenance reports, available in the historian database 106) to augment the model prediction.

The present disclosure thus describes an approach to provide user-friendly explanations and/or recommendations associated with predictions provided by machine-learned models. In the context of an autonomous industrial plant, when a machine learned model provides an upfront alert to the operator, the systems and methods disclosed herein provide an explanation behind the alert generated by the model. Furthermore, the systems and methods search a history of similar events in the past, consolidate information pertaining to the history with that pertaining to the current scenario, so as to provide a holistic view of the current system state by providing: i) visual details of the process equipment and/or instrumentation responsible for the alert through an annotated P&ID diagram; ii) details of the impacted process equipment and/or instrumentation from a knowledge graph; and iii) possible operator actions taken when similar events occurred in the past.

The systems and methods disclosed herein therefore present the operator with sufficient information regarding the internal state prevailing in the industrial automation system, optionally including actionable recommendations of possible interventions, so as to enable the operator to interact with the system to ensure its proper operation and in particular to avoid technical malfunction.

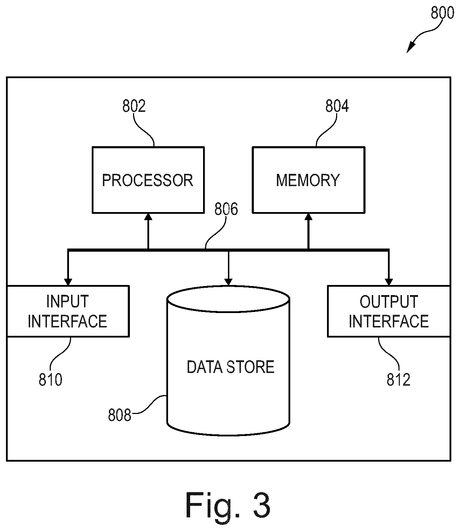

Fig. 3 illustrates an exemplary computing system 800 that can be used in accordance with the systems and methods disclosed herein. The computing system 800 may form part of or comprise any desktop, laptop, server, or cloud-based computing system. The computing system 800 includes at least one processor 802 that executes instructions that are stored in a memory 804. The instructions may be, for instance, instructions for implementing functionality described as being carried out by one or more components described herein or instructions for implementing one or more of the methods described herein. The processor 802 may access the memory 804 by way of a system bus 806. In addition to storing executable instructions, the memory 804 may also store conversational inputs, scores assigned to the conversational inputs, etc.

The computing system 800 additionally includes a data store 808 that is accessible by the processor 802 by way of the system bus 806. The data store 808 may include executable instructions, log data, etc. The computing system 800 also includes an input interface 810 that allows external devices to communicate with the computing system 800. For instance, the input interface 810 may be used to receive instructions from an external computer device, from a user, etc. The computing system 800 also includes an output interface 812 that interfaces the computing system 800 with one or more external devices. For example, the computing system 800 may display text, images, etc. by way of the output interface 812.

It is contemplated that the external devices that communicate with the computing system 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 800 may be a distributed system. Thus, for instance, several devices may be in communication by way of a network connection and may collectively perform tasks described as being performed by the computing system 800.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. The invention is set out in the appended set of claims.

Any reference signs in the claims should not be construed as limiting the scope.

## Claims

1. An explainer system (100) for explaining an alarm raised by a machine learned model (152) of an industrial automation system, the explainer system configured to:
receive model output from the machine learned model trained to predict anomalous behaviour in the industrial automation system and to raise the alarm;
process the model output using at least one prediction explanation technique to identify at least one influential feature which contributed to the model output;
use the identified at least one influential feature to extract contextual information from at least one machine-readable information source (106, 108, 110, 114, 118) pertaining to the industrial automation system, wherein the explainer system is configured to extract, as part of the contextual information, information pertaining to at least one past event which is similar to the event that is associated with the alarm to be explained, wherein the event that is associated with the alarm to be explained comprises a current event, wherein the explainer system is further configured to employ a search algorithm to locate the at least one similar past event in a database, and to formulate a search query for the search algorithm based on data characterizing the current event, wherein the explainer system is configured to formulate the search query by obtaining timeseries data for the at least one influential feature, and to use the obtained timeseries data, as the data characterizing the current event, to formulate the search query, and to constrain the obtained timeseries data, when formulating the search query, to a predetermined time window; and
prepare the extracted contextual information for display to an operator of the industrial automation system, to enable the operator to select an appropriate action to take in response to the alarm for ensuring proper functioning of the industrial automation system.

2. The explainer system of claim 1, further configured to determine the time window using an interquartile approach, taking the current event as the median.

3. The explainer system of any preceding claim, further configured to identify at least one past operator action taken in connection with the at least one similar past event.

4. The explainer system of any preceding claim, further configured to extract, as part of the contextual information, information from an ontology describing the industrial automation system.

5. The explainer system of claim 4, further configured to identify at least one entity which is linked to, or associated with, the at least one influential feature in the ontology.

6. The explainer system of claim 5, wherein the extracted information comprises asset information pertaining to the identified entity.

7. The explainer system of any preceding claim, further configured to extract, as part of the contextual information, information from at least one piping and instrumentation diagram pertaining to the industrial automation system.

8. The explainer system of claim 7, configured to prepare the extracted contextual information for display by annotating the at least one piping and instrumentation diagram to indicate the contextual information comprised therein.

9. The explainer system of any preceding claim, wherein the contextual information comprises process data, and wherein the explainer system is configured to prepare the extracted contextual information for display to the operator by preparing a plot illustrating the process data over time.

10. The explainer system of any preceding claim, further comprising a feedback collector configured to collect feedback from the operator regarding the contextual information and to use the feedback to improve subsequent explanations.

11. A method for explaining an alarm raised by a machine learned model of an industrial automation system, the method comprising:
receiving model output from the machine learned model trained to predict anomalous behaviour in the industrial automation system and to raise the alarm;
processing the model output using at least one prediction explanation technique to identify at least one influential feature which contributed to the model output;
using the identified at least one influential feature to extract contextual information from at least one machine-readable information source pertaining to the industrial automation system, comprising extracting, as part of the contextual information, information pertaining to at least one past event which is similar to the event that is associated with the alarm to be explained, wherein the event that is associated with the alarm to be explained comprises a current event, employing a search algorithm to locate the at least one similar past event in a database, and formulating a search query for the search algorithm based on data characterizing the current event, comprising formulating the search query by obtaining timeseries data for the at least one influential feature, using the obtained timeseries data, as the data characterizing the current event, to formulate the search query, and constraining the obtained timeseries data, when formulating the search query, to a predetermined time window; and
preparing the extracted contextual information for display to an operator of the industrial automation system, to enable the operator to select an appropriate action to take in response to the alarm for ensuring proper functioning of the industrial automation system.

12. A computer program product comprising instructions which, when executed by a computing system, cause the computing system to perform the method of claim 11.

## Patentansprüche

1. Erklärsystem (100) zum Erklären eines von einem maschinell gelernten Modell (152) eines industriellen Automatisierungssystems ausgelösten Alarms, wobei das Erklärsystem eingerichtet ist zum:
Empfangen von Modellausgaben von dem maschinell gelernten Modell, das darauf trainiert ist, anomales Verhalten im industriellen Automatisierungssystem vorherzusagen und den Alarm auszulösen;
Verarbeiten der Modellausgabe unter Verwendung mindestens einer Vorhersage-Erklärungstechnik, um mindestens ein einflussreiches Merkmal zu identifizieren, das zur Modellausgabe beigetragen hat;
Verwenden des mindestens einen identifizierten einflussreichen Merkmals zum Extrahieren von Kontextinformationen aus mindestens einer maschinenlesbaren Informationsquelle (106, 108, 110, 114, 118), die das industrielle Automatisierungssystem betrifft, wobei das Erklärsystem eingerichtet ist zum Extrahieren, als Teil der Kontextinformationen, von Informationen, die mindestens ein vergangenes Ereignis betreffen, das dem Ereignis ähnlich ist, das mit dem zu erklärenden Alarm verbunden ist, wobei das mit dem zu erklärenden Alarm verbundene Ereignis ein aktuelles Ereignis umfasst, wobei das Erklärsystem ferner eingerichtet ist zum Einsatz eines Suchalgorithmus, um das mindestens eine ähnliche vergangene Ereignis in einer Datenbank zu finden, und zum Formulieren einer Suchanfrage für den Suchalgorithmus basierend auf Daten, die das aktuelle Ereignis charakterisieren, wobei das Erklärsystem eingerichtet ist zum Formulieren der Suchanfrage durch das Erhalten von Zeitreihendaten für das mindestens eine einflussreiche Merkmal und zum Verwenden der erhaltenen Zeitreihendaten als die das aktuelle Ereignis charakterisierenden Daten zur Formulierung der Suchanfrage sowie zum Beschränken der erhaltenen Zeitreihendaten bei der Formulierung der Suchanfrage auf ein vorbestimmtes Zeitfenster; und
Vorbereiten der extrahierten Kontextinformationen für die Anzeige an einen Bediener des industriellen Automatisierungssystems, um dem Bediener zu ermöglichen, eine geeignete Maßnahme als Reaktion auf den Alarm auszuwählen, um das ordnungsgemäße Funktionieren des industriellen Automatisierungssystems sicherzustellen.

2. Erklärsystem nach Anspruch 1, ferner eingerichtet zum Bestimmen des Zeitfensters unter Verwendung eines Interquartil-Ansatzes, wobei das aktuelle Ereignis als Median genommen wird.

3. Erklärsystem nach einem der vorhergehenden Ansprüche, ferner eingerichtet zum Identifizieren von mindestens einer vergangenen Bedieneraktion, die im Zusammenhang mit dem mindestens einen ähnlichen vergangenen Ereignis durchgeführt wurde.

4. Erklärsystem nach einem der vorhergehenden Ansprüche, ferner eingerichtet zum Extrahieren, als Teil der Kontextinformationen, von Informationen aus einer Ontologie, die das industrielle Automatisierungssystem beschreibt.

5. Erklärsystem nach Anspruch 4, ferner eingerichtet zum Identifizieren von mindestens einer Entität, die in der Ontologie mit dem mindestens einen einflussreichen Merkmal verknüpft oder assoziiert ist.

6. Erklärsystem nach Anspruch 5, wobei die extrahierten Informationen Anlageninformationen betreffen, die sich auf die identifizierte Entität beziehen.

7. Erklärsystem nach einem der vorhergehenden Ansprüche, ferner eingerichtet zum Extrahieren, als Teil der Kontextinformationen, von Informationen aus mindestens einem Rohrleitungs- und Instrumentierungsdiagramm, das das industrielle Automatisierungssystem betrifft.

8. Erklärsystem nach Anspruch 7, eingerichtet zum Vorbereiten der extrahierten Kontextinformationen für die Anzeige durch Annotieren des mindestens einen Rohrleitungs- und Instrumentierungsdiagramms, um die darin enthaltenen Kontextinformationen anzuzeigen.

9. Erklärsystem nach einem der vorhergehenden Ansprüche, wobei die Kontextinformationen Prozessdaten umfassen und wobei das Erklärsystem eingerichtet ist zum Vorbereiten der extrahierten Kontextinformationen für die Anzeige an den Bediener durch das Erstellen eines Diagramms, das die Prozessdaten über die Zeit darstellt.

10. Erklärsystem nach einem der vorhergehenden Ansprüche, ferner umfassend einen Feedback-Sammler, der eingerichtet ist zum Sammeln von Feedback vom Bediener bezüglich der Kontextinformationen und zum Verwenden des Feedbacks zur Verbesserung nachfolgender Erklärungen.

11. Verfahren zum Erklären eines von einem maschinell gelernten Modell eines industriellen Automatisierungssystems ausgelösten Alarms, wobei das Verfahren umfasst:
Empfangen von Modellausgaben von dem maschinell gelernten Modell, das darauf trainiert ist, anomales Verhalten im industriellen Automatisierungssystem vorherzusagen und den Alarm auszulösen;
Verarbeiten der Modellausgabe unter Verwendung mindestens einer Vorhersage-Erklärungstechnik, um mindestens ein einflussreiches Merkmal zu identifizieren, das zur Modellausgabe beigetragen hat;
Verwenden des mindestens einen identifizierten einflussreichen Merkmals zum Extrahieren von Kontextinformationen aus mindestens einer maschinenlesbaren Informationsquelle, die das industrielle Automatisierungssystem betrifft, wobei das Extrahieren, als Teil der Kontextinformationen, Informationen umfasst, die mindestens ein vergangenes Ereignis betreffen, das dem Ereignis ähnlich ist, das mit dem zu erklärenden Alarm verbunden ist, wobei das mit dem zu erklärenden Alarm verbundene Ereignis ein aktuelles Ereignis umfasst, wobei ein Suchalgorithmus eingesetzt wird, um das mindestens eine ähnliche vergangene Ereignis in einer Datenbank zu finden, und eine Suchanfrage für den Suchalgorithmus basierend auf Daten formuliert wird, die das aktuelle Ereignis charakterisieren, wobei das Formulieren der Suchanfrage das Erhalten von Zeitreihendaten für das mindestens eine einflussreiche Merkmal umfasst, wobei die erhaltenen Zeitreihendaten als die das aktuelle Ereignis charakterisierenden Daten zur Formulierung der Suchanfrage verwendet werden und die erhaltenen Zeitreihendaten bei der Formulierung der Suchanfrage auf ein vorbestimmtes Zeitfenster beschränkt werden; und
Vorbereiten der extrahierten Kontextinformationen für die Anzeige an einen Bediener des industriellen Automatisierungssystems, um dem Bediener zu ermöglichen, eine geeignete Maßnahme als Reaktion auf den Alarm auszuwählen, um das ordnungsgemäße Funktionieren des industriellen Automatisierungssystems sicherzustellen.

12. Computerprogrammprodukt, umfassend Anweisungen, die, wenn sie von einem Computersystem ausgeführt werden, das Computersystem veranlassen, das Verfahren nach Anspruch 11 auszuführen.

## Revendications

1. Système explicateur (100) destiné à expliquer une alarme donnée par un modèle appris par machine (152) d'un système d'automatisation industrielle, le système explicateur étant configuré pour :
recevoir une sortie de modèle en provenance du modèle appris par machine entraîné pour prédire un comportement anormal dans le système d'automatisation industrielle et pour donner l'alarme ;
traiter la sortie de modèle en utilisant au moins une technique d'explication de prédiction pour identifier au moins une caractéristique influente qui a contribué à la sortie de modèle ;
utiliser l'au moins une caractéristique influente identifiée pour extraire des informations contextuelles d'au moins une source d'informations lisibles par machine (106, 108, 110, 114, 118) se rapportant au système d'automatisation industrielle, dans lequel le système explicateur est configuré pour extraire, en tant que partie des informations contextuelles, des informations se rapportant à au moins un événement passé qui est similaire à l'événement qui est associé à l'alarme devant être expliquée, dans lequel l'événement qui est associé à l'alarme devant être expliquée comprend un événement actuel, dans lequel le système explicateur est configuré en outre pour employer un algorithme de recherche pour localiser l'au moins un événement passé similaire dans une base de données, et pour élaborer une interrogation de recherche pour l'algorithme de recherche sur la base de données caractérisant l'événement actuel, dans lequel le système explicateur est configuré pour élaborer l'interrogation de recherche en obtenant des données de séries temporelles pour l'au moins une caractéristique influente, et pour utiliser les données de séries temporelles obtenues, en tant que données caractérisant l'événement actuel, pour élaborer l'interrogation de recherche, et pour restreindre les données de séries temporelles obtenues, lors de l'élaboration l'interrogation de recherche, à une fenêtre temporelle prédéterminée ; et
préparer les informations contextuelles extraites pour l'affichage pour un opérateur du système d'automatisation industrielle, pour permettre à l'opérateur de sélectionner une action appropriée à entreprendre en réponse à l'alarme pour garantir le fonctionnement correct du système d'automatisation industrielle.

2. Système explicateur de la revendication 1, configuré en outre pour déterminer la fenêtre temporelle en utilisant une approche interquartile, en considérant l'événement actuel en tant que médian.

3. Système explicateur d'une quelconque revendication précédente, configuré en outre pour identifier au moins une action d'opérateur passée entreprise en association avec l'au moins un événement passé similaire.

4. Système explicateur d'une quelconque revendication précédente, configuré en outre pour extraire, en tant que partie des informations contextuelles, des informations d'une ontologie décrivant le système d'automatisation industrielle.

5. Système explicateur de la revendication 4, configuré en outre pour identifier au moins une entité qui est liée à, ou associée à, l'au moins une caractéristique influente dans l'ontologie.

6. Système explicateur de la revendication 5, dans lequel les informations extraites comprennent des informations d'actif se rapportant à l'entité identifiée.

7. Système explicateur d'une quelconque revendication précédente, configuré en outre pour extraire, en tant que partie des informations contextuelles, des informations d'au moins un schéma de tuyauteries et d'instrumentations se rapportant au système d'automatisation industrielle.

8. Système explicateur de la revendication 7, configuré pour préparer les informations contextuelles extraites pour l'affichage, en annotant l'au moins un schéma de tuyauteries et d'instrumentations pour indiquer les informations contextuelles comprises dans celui-ci.

9. Système explicateur d'une quelconque revendication précédente, dans lequel les informations contextuelles comprennent des données de processus, et dans lequel le système explicateur est configuré pour préparer les informations contextuelles extraites pour l'affichage pour l'opérateur en préparant un représentation graphique illustrant les données de processus au fil du temps.

10. Système explicateur d'une quelconque revendication précédente, comprenant en outre un collecteur de retour configuré pour collecter un retour en provenance de l'opérateur concernant les informations contextuelles et pour utiliser le retour pour améliorer des explications subséquentes.

11. Procédé pour expliquer une alarme donnée par un modèle appris par machine d'un système d'automatisation industrielle, le procédé comprenant :
la réception d'une sortie de modèle en provenance du modèle appris par machine entraîné pour prédire un comportement anormal dans le système d'automatisation industrielle et pour donner l'alarme ;
le traitement de la sortie de modèle en utilisant au moins une technique d'explication de prédiction pour identifier au moins une caractéristique influente qui a contribué à la sortie de modèle ;
l'utilisation de l'au moins une caractéristique influente identifiée pour extraire des informations contextuelles d'au moins une source d'informations lisibles par machine se rapportant au système d'automatisation industrielle, comprenant l'extraction, en tant que partie des informations contextuelles, d'informations se rapportant à au moins un événement passé qui est similaire à l'événement qui est associé à l'alarme devant être expliquée, dans lequel l'événement qui est associé à l'alarme devant être expliquée comprend un événement actuel, l'emploi d'un algorithme de recherche pour localiser l'au moins un événement passé similaire dans une base de données, et l'élaboration d'une interrogation de recherche pour l'algorithme de recherche sur la base de données caractérisant l'événement actuel, comprenant l'élaboration de l'interrogation de recherche en obtenant des données de séries temporelles pour l'au moins une caractéristique influente, l'utilisation des données de séries temporelles obtenues, en tant que données caractérisant l'événement actuel, pour élaborer l'interrogation de recherche, et la restriction des données de séries temporelles obtenues, lors de l'élaboration l'interrogation de recherche, à une fenêtre temporelle prédéterminée ; et
la préparation des informations contextuelles extraites pour l'affichage pour un opérateur du système d'automatisation industrielle, pour permettre à l'opérateur de sélectionner une action appropriée à entreprendre en réponse à l'alarme pour garantir le fonctionnement correct du système d'automatisation industrielle.

12. Produit programme d'ordinateur, comprenant des instructions qui, lorsqu'elles sont exécutées par un système informatique, amènent le système informatique à réaliser le procédé de la revendication 11.
